# FASCICULE DE BREVET EUROPEEN

(11) **EP 4 244 126 B1**
(45) Date de publication et mention de la délivrance du brevet: **17.07.2024**
(21) Numéro de dépôt: 21799291.6
(22) Date de dépôt: 27.10.2021
(51) Int. Cl.: B62J 45/42, B62K 21/26, B62K 21/12, G01C 21/36

(54) **GUIDON CONNECTÉ POUR VÉHICULE**
VERBUNDENE LENKSTANGE FÜR EIN FAHRZEUG
CONNECTED HANDLEBAR FOR A VEHICLE

(30) Priorité: 13.11.2020 FR 2011636
(43) Date de publication de la demande: 20.09.2023
(73) Titulaire: Vel'Co, 44300 Nantes (FR)
(72) Inventeur: SMITH, Johnny, 44300 Nantes (FR); SAVOURÉ, Romain, 44000 Nantes (FR); REGNIER, Pierre, 44800 Saint Herblain (FR)
(74) Mandataire: Lequien, Philippe
(86) Numéro de dépôt international: PCT/EP2021/079786
(87) Numéro de publication internationale: WO 2022/101008

(56) Documents cités:
- EP-A1- 2 942 245
- WO-A1-2020/178488
- US-A1- 2017 080 993
- UTILISATION MANUEL D ': "Winkbar", 1 March 2020 (2020-03-01), pages 1 - 28, XP055813140, Retrieved from the Internet <URL:https://velco.tech/wp-content/uploads/2020/03/usermanual10.pdf> [retrieved on 20210611]

## Description

Le domaine de l'invention est celui de la conception et de la fabrication d'équipements de véhicules à guidon.

L'invention concerne plus précisément un guidon de véhicule, tel qu'un vélo, qui présente des composants électroniques pour permettre au guidon d'envoyer et de recevoir des informations électroniques.

Dans le domaine de l'invention, on connaît des guidons pour véhicules réalisés à partir de matériaux variés. Par exemple, l'aluminium, le carbone, le bois ou encore le plastique peuvent être utilisés pour fabriquer des guidons.

Un guidon comprend un cintre et une potence sur laquelle est rattaché le cintre. Pour assurer une utilisation du guidon en toute sécurité, le cintre et la potence du guidon se doivent de présenter une résistance structurelle suffisamment importante.

Pour assurer cette résistance structurelle, les cintres des guidons présentent des conceptions spécifiques en fonction des matériaux utilisés pour les réaliser. Par exemple, pour pouvoir présenter une résistance structurelle suffisante, les cintres en bois ou en plastique sont généralement plein de matière. Ces cintres présentent alors une rigidité importante leur permettant d'être homologués par les différents organismes compétents.

On connaît également des cintres avec une structure évidée, mais réalisés avec des matériaux tels que l'acier ou l'aluminium, permettant ainsi aux cintres de présenter une rigidité suffisante pour pouvoir être homologués.

EP 2 942 245 A1 divulgue les caractéristiques du préambule de la revendication 1.

Dans le domaine de l'invention, on connaît également le guidon de vélo décrit dans le document de brevet publié sous le WO2017/207782A1.

Le guidon décrit dans ce document est dit « connecté ».

Plus précisément, ce guidon de vélo comprend un cintre pouvant recevoir une unité de commande électronique, des moyens de communication sans-fil comprenant une antenne, et des batteries électriques. Ce guidon de vélo peut établir une connexion sans-fil avec un téléphone portable.

La qualité de la connectivité sans-fil du guidon de vélo pose cependant problème. En effet, la capacité d'émission et de réception des ondes radio est particulièrement impactée par la nature même du cintre : un tube métallique. Un tel tube métallique constitue en effet un environnement électromagnétiquement imperméable apte à perturber ou empêcher la diffusion d'ondes électromagnétiques.

En conséquence, une antenne ne peut pas être intégrée directement à l'intérieur du tube métallique formant le cintre.

La réalisation d'une fenêtre sur le cintre par le biais d'une découpe du tube métallique permettrait d'intégrer l'antenne de manière à ce que cette dernière puisse réceptionner et émettre des ondes électromagnétiques. Une telle fenêtre remettrait toutefois en cause la résistance structurelle du guidon tout en ne permettant pas d'obtenir une bonne qualité de diffusion des ondes électromagnétiques.

En effet, de par sa forme et la nature du matériau à partir duquel il est formé, un tube métallique génère un environnement impropre à la diffusion d'onde électromagnétique. Cette propriété est telle que même le tube métallique, sans modification structurelle susceptible de dégrader sa résistance structurelle, ne peut être simplement utilisé en tant qu'antenne.

De plus, même une antenne prenant la forme d'une tige s'étendant radialement depuis le tube métallique du cintre, au dépit d'une intégration harmonieuse, pourrait présenter des performances dégradées.

Le document de brevet publié sous le numéro EP2942244A1 décrit un système de suivi et de repérage pouvant être intégré dans un guidon de vélo. Plusieurs antennes sont intégrées dans un embout prenant place à l'extrémité d'un corps principal du cintre d'un guidon. Il est constaté que la capacité d'émission et de réception d'ondes radio des antennes n'est pas optimale.

Le déposant a réalisé plusieurs recherches et développements sur le sujet qui ont notamment conduit au dépôt de la demande de brevet publiée sous le numéro WO2020/178488. Le système décrit dans ce document de brevet permet d'optimiser le fonctionnement de différentes antennes intégrées dans un guidon.

Cette solution satisfaisante quant aux fonctionnements des antennes induit toutefois une perte de simplicité apparente du guidon qui est alors pourvu de boitiers supplémentaires répartis le long de son cintre.

De plus, les besoins de connectivité d'un tel guidon connecté peuvent être épurés et seuls un récepteur de système de navigation et de positionnement par satellite, dit « récepteur de géolocalisation », ainsi qu'une antenne d'émission et de réception de données sans fil, par exemple du type GPRS, sont essentiels.

Il existe ainsi un besoin relatif à une intégration harmonieuse et simple en apparence d'une antenne de télécommunication et d'un récepteur de géolocalisation sur un guidon de vélo.

Plus précisément, l'invention a pour objectif de proposer un tel guidon qui intègre l'antenne et le récepteur de géolocalisation de manière satisfaisante quant à leur capacité de fonctionnement dans l'embout couplé à une extrémité du cintre du guidon.

Ces objectifs, ainsi que d'autres qui apparaitront par la suite, sont atteints grâce à l'invention qui a pour objet un guidon pour véhicule, comprenant :
- un cintre présentant un volume interne, s'étendant longitudinalement entre deux portions d'extrémité, dont une portion dite « extrémité de couplage » qui présente un axe central d'extension ;
- un embout présentant une partie interne insérée dans l'extrémité de couplage du cintre, et une partie externe qui prolonge longitudinalement l'extrémité de couplage le long de l'axe central d'extension, la partie externe étant conçue dans un matériau électromagnétiquement perméable ;
- une unité de traitement électronique logée dans le volume interne du cintre ;
- une antenne d'émission et de réception de données électroniques couplée à l'unité de traitement électronique, l'antenne présentant une forme allongée s'étendant selon un axe longitudinal et étant destinée à permettre un échange de données électroniques avec un réseau de télécommunications ;
- un récepteur de système de navigation et de positionnement par satellites, le récepteur étant couplé à l'unité de traitement électronique ;

le guidon présentant deux zones préférentielles de préhension destinées à être prises en main lors d'une utilisation du guidon, dont l'une, dite « zone émissive », est située du côté de l'extrémité de couplage,
caractérisé en ce que l'antenne et le récepteur sont logés dans la partie externe de l'embout, l'axe longitudinal de l'antenne étant parallèle à l'axe central d'extension, et l'antenne étant située au moins partiellement dans la zone émissive,
et en ce que l'antenne est intercalée le long de l'axe central d'extension entre le récepteur et l'extrémité de couplage, le récepteur étant écarté de la zone émissive.

Le guidon selon l'invention présente une intégration simple en apparence de ses composants électroniques.

En effet, l'antenne et le récepteur de géolocalisation sont tous les deux situés à l'intérieur de l'embout couplé à l'extrémité du guidon. Il n'y a alors pas de boitier supplémentaire sur le guidon qui présente une apparence classique, comparable à celle d'un guidon non connecté.

De plus, le fonctionnement de l'ensemble formé par l'antenne et le récepteur de géolocalisation est optimisé malgré un effet négatif de l'antenne sur le récepteur de géolocalisation.

En effet, l'antenne produit classiquement des perturbations électromagnétiques lors de la réception et de l'émission de données. Le positionnement du récepteur de géolocalisation à proximité immédiate de l'antenne induit ainsi des perturbations du fonctionnement du récepteur.

A contrario des recommandations techniques, la solution selon l'invention propose d'intercaler l'antenne entre le récepteur de géolocalisation et l'extrémité du guidon où est située l'unité de traitement électronique.

Ce positionnement induit la survenue de perturbations produites par l'antenne sur la connexion entre le récepteur de géolocalisation et l'unité de traitement électronique qui doit obligatoirement passer à côté de l'antenne. De plus, l'antenne peut ne pas présenter un fonctionnement optimal en étant positionnée directement à proximité du cintre du guidon, dont le matériau est susceptible de ne pas être électromagnétiquement perméable.

Une conception suivant les recommandations techniques conduirait alors à positionner l'antenne de manière distale par rapport au cintre pour permettre de meilleures réception et émission des données, et d'intercaler le récepteur de géolocalisation entre l'antenne et l'extrémité de couplage du guidon.

Toutefois, cette conception envisagée par les inventeurs ne produit pas un résultat satisfaisant à cause d'un effet de masquage du récepteur de géolocalisation par la main de l'utilisateur lorsqu'il utilise le véhicule équipé du guidon.

Aussi, en positionnant le récepteur de géolocalisation de manière distale par rapport au cintre, l'effet de masquage par une main est minimisé, les utilisateurs ayant tendance à saisir les guidons par les zones préférentielles de préhension qui sont classiquement plus proche des actionneurs de vitesse et de freinage que des extrémités distales des guidons.

Le fonctionnement du récepteur de géolocalisation, bien qu'ayant une connexion avec l'unité électronique perturbée par le fonctionnement de l'antenne, est alors meilleur que celui de la solution préconisée, et suffisant pour permettre un bon fonctionnement des fonctions de géolocalisation du guidon.

Le fonctionnement de l'antenne est quant à lui moins bon que celui pouvant être obtenu avec la conception préconisée.

Néanmoins, le fonctionnement global de l'antenne et du récepteur de géolocalisation est bien plus satisfaisant et valable techniquement que la conception évidente au regard des recommandations techniques.

Selon une conception préférée, et selon une projection orthogonale sur l'axe central d'extension, l'antenne et le récepteur se suivent ou sont écartés l'un de l'autre.

En d'autres termes, et toujours selon une projection orthogonale sur l'axe central d'extension, l'antenne et le récepteur ne présentent pas de recouvrement. Le fonctionnement de l'antenne n'est que peu perturbé du fait que les ondes électromagnétiques tendent à se diffuser autour de l'antenne perpendiculairement à son axe longitudinal.

Préférentiellement, le récepteur est couplé à l'unité de traitement électronique par une connexion blindée au moins au niveau de l'antenne le long de l'axe central d'extension.

De cette manière, la connexion du récepteur à l'unité de traitement électronique n'est plus perturbée, ou est moins perturbée, par les perturbations que l'antenne est susceptible de produire sur cette connexion.

Selon une caractéristique avantageuse, l'antenne et le récepteur sont montés sur une première carte électronique montée fixe dans l'embout, l'embout présentant une position et une orientation prédéterminée par rapport au cintre.

Le montage de l'antenne et du récepteur dans l'embout est ainsi simplifié et leurs positions sont toujours assurées de par la prédétermination de la position de l'embout par rapport au cintre du guidon et de position de la carte électronique par rapport à l'embout.

Selon une solution préférée, le guidon présente une orientation ciel/sol prédéfinie, la première carte électronique étant montée transversale par rapport à cette orientation ciel/sol prédéfinie, et le récepteur étant monté sur une face supérieure de la première carte électronique, destinée à être orientée vers le ciel.

Grâce à cette solution, le récepteur présente toujours une position optimisant son fonctionnement en étant orienté vers le ciel pour recevoir les signaux envoyés par une constellation de satellites de géolocalisation.

Selon une conception avantageuse, l'antenne est montée sur une face inférieure de la première carte électronique.

Une telle conception permet de minimiser la taille de l'embout en rapprochant le plus possible l'antenne du récepteur le long de l'axe central d'extension tout en les écartant l'un de l'autre par le biais du positionnement de part et d'autre de la carte électronique. Cette conception permet également de minimiser la longueur totale des éléments insérés dans le cintre du guidon, autorisant ainsi le cintre à présenter une courbure proche de la zone émissive.

Avantageusement, la partie externe de l'embout présente une longueur inférieure à 50 millimètres le long de l'axe central d'extension, et avantageusement supérieure à 35 millimètres.

Un tel dimensionnement de l'embout permet au cintre de répondre aux exigences réglementaires en terme de résistance structurelle et de permettre à l'embout de disposer d'une longueur suffisante pour loger l'antenne et le récepteur et leur garantir la possibilité de fonctionner de manière adéquate.

L'invention a également pour objet un véhicule comprenant un guidon tel que décrit précédemment.

D'autres caractéristiques et avantages de l'invention apparaîtront plus clairement à la lecture de la description suivante d'un mode de réalisation préférentiel de l'invention, donnés à titre d'exemples illustratifs et non limitatifs, et des dessins annexés parmi lesquels :
- la figure 1 est une représentation schématique d'un guidon selon l'invention comprenant un cintre et un embout situé à l'une des extrémités du cintre ;
- la figure 2 est une représentation schématique selon une coupe transversale de l'embout et de la portion du cintre sur laquelle est couplé l'embout ;
- la figure 3 est une représentation schématique en perspective d'une carte électronique présentant un récepteur de système de navigation et de positionnement par satellites ainsi qu'une antenne d'émission et de réception de données électroniques destinée à permettre un échange de données électroniques avec un réseau de télécommunications.

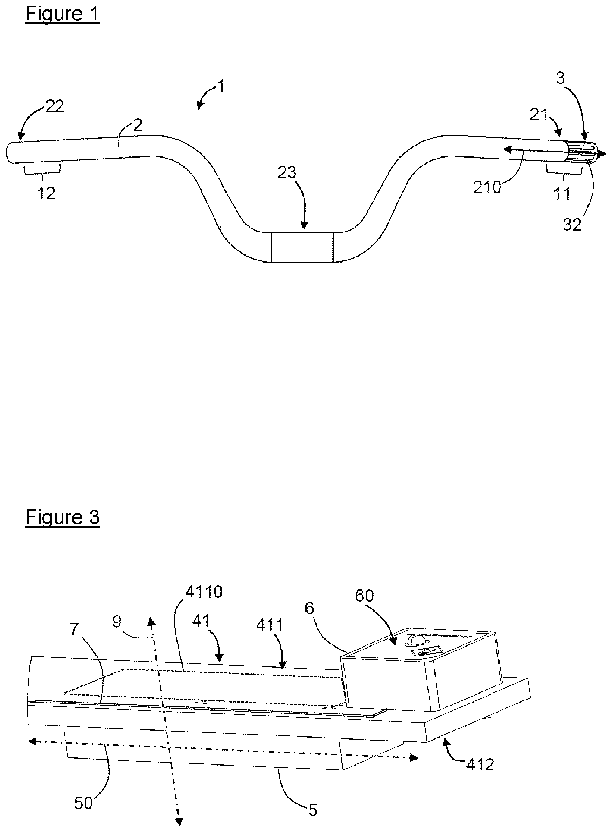

En référence à la figure 1, un guidon 1 selon l'invention est représenté. Le guidon 1 est un guidon pour véhicule.

Les véhicules comprenant le guidon selon l'invention peuvent notamment être des vélos ou des trottinettes.

Le guidon 1 selon l'invention est plus particulièrement adapté pour des véhicules électriques pourvus d'une propulsion électrique.

Tel que cela est détaillé par la suite, le guidon 1 peut être connecté à un kit d'assistance électrique dudit véhicule.

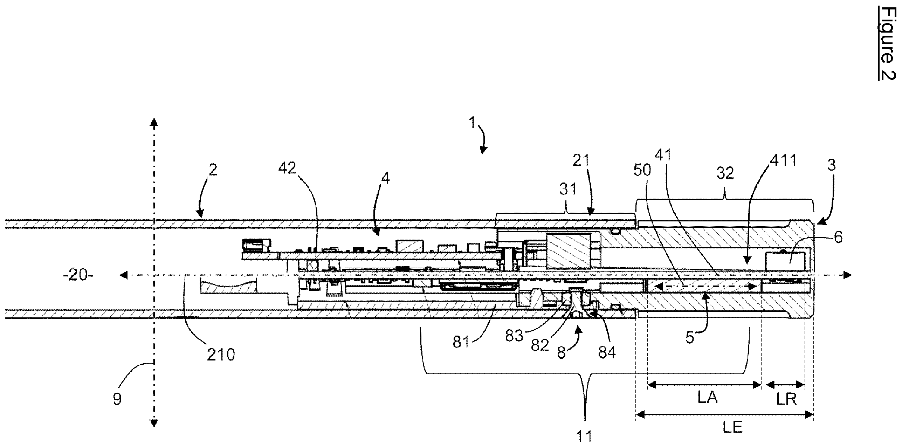

En référence aux figures 1 et 2, le guidon 1 présente deux zones préférentielles de préhension qui sont destinées à être prises en main lors d'une utilisation du guidon 1. Ces deux zones préférentielles de préhension peuvent par exemple être équipées de gaines en matériau moussé pour rendre plus agréable la préhension de ces zones.

En référence aux figures 1 et 2, le guidon 1 comprend :
- un cintre 2 ;
- un embout 3.

Le cintre 2 s'étend longitudinalement entre deux portions d'extrémité, dont une première portion d'extrémité dite « extrémité de couplage 21 », et une deuxième portion d'extrémité 22.

Tel qu'illustré par les figures 1 et 2, l'extrémité de couplage 21 présente un axe central d'extension 210. Plus précisément, cette première portion s'étend de manière rectiligne selon son axe central d'extension 210.

Le cintre 2 présente également une zone centrale 23 destinée par exemple à former une zone de couplage du cintre 2 à une potence d'un véhicule.

Selon le présent mode de réalisation, le cintre 2 a une section transversale circulaire. En conséquence, l'extrémité de couplage 21 prend une forme cylindrique de révolution autour de l'axe central d'extension 210.

En référence à la figure 2, le cintre 2 présente un volume interne 20.

Le cintre 2 est notamment formé à partir d'un tube.

A titre d'exemple, le cintre 2 est constitué à partir d'un métal ou d'un alliage de métal. Ce type de matériaux présente une résistance structurelle importante et une relative imperméabilité aux ondes électromagnétiques.

Du côté de l'extrémité de couplage 21, le cintre 2 présente une longueur plus faible, depuis la zone centrale 23, que du côté de la deuxième extrémité 22.

L'embout 3 est destiné à être couplé à l'extrémité de couplage 21 du cintre 2. Cet embout 3 prolonge l'extrémité de couplage 21 et permet au guidon de présenter une même longueur de part et d'autre de la zone centrale 23.

L'embout 3 prolonge longitudinalement l'extrémité de couplage 21 le long de l'axe central d'extension 210.

Plus précisément, l'embout 3 présente une partie interne 31 et une partie externe 32.

La partie interne 31 est insérée dans l'extrémité de couplage 21 du cintre 2.

La partie externe 32 s'étend quant à elle depuis la partie interne 31. En d'autres termes, seule la partie externe 32 prolonge longitudinalement l'extrémité de couplage 21 le long de l'axe central d'extension 210.

Cette partie externe 32 est conçue dans un matériau perméable aux ondes électromagnétiques. Plus particulièrement, la partie externe est formé à partir de plastique renforcé de fibres.

En référence à la figure 2, l'embout 3 présente une position et une orientation prédéterminée par rapport au cintre 2. En effet, le guidon 1 comprend des moyens de maintien 8 de l'embout à l'intérieur du cintre 2. Ces moyens de maintien 8 empêchent l'embout de tourner autour de l'axe central d'extension 210 à l'intérieur du cintre 2.

Les moyens de maintien 8 comprennent un chariot 81, une vis 82 et un écrou 83.

Le chariot 81 est destiné à être inséré complètement dans l'extrémité de couplage 21 du cintre 2.

La partie interne 31 de l'embout 3 s'assemble sur le chariot 81, rendant ainsi le chariot 81 et l'embout 3 solidaires l'un de l'autre une fois qu'ils sont insérés dans l'extrémité de couplage 21.

L'écrou 83 est maintenu fixe par rapport au chariot 81 et à l'embout 3. En effet, le chariot 81 et la partie interne 31 de l'embout 3 forment ensemble un logement à l'empreinte de l'écrou 83.

Quand le chariot 81 et l'embout 3 sont en position par rapport au cintre 2, l'écrou 83 est alors en vis-à-vis d'un trou 84 ménagé sur une face inférieure du cintre 2. La vis 82 peut alors être vissée dans l'écrou 83 pour verrouiller en position le chariot 81 et l'embout 3 dans le cintre 2. Ce chariot 81 et l'embout 3 sont alors immobile par rapport au cintre 2 et ne peuvent alors plus ni coulisser dans le cintre 2 le long de l'axe central d'extension 210, ni tourner autour de cet axe.

Tel qu'évoqué précédemment et en référence aux figures 1 et 2, le guidon 1 présente deux zones préférentielles de préhension. Les deux zones préférentielles de préhension sont plus précisément composées d'une première zone dite « zone émissive » 11 qui est située du côté de l'extrémité de couplage 21, et d'une deuxième zone 12 de préhension située du côté de la deuxième extrémité 22.

La zone émissive 11 est formée par une partie de la partie externe 32 de l'embout 3, et ainsi que par une partie de l'extrémité de couplage 21.

L'extrémité de couplage 21 et la partie externe 32 de l'embout 3 sont destinés à accueillir des composants électroniques, la partie externe 32 accueillant notamment des composants susceptibles de recevoir et/ou d'émettre des signaux électromagnétiques.

En effet, le guidon 1 selon l'invention comprend également :
- une unité de traitement électronique 4 ;
- une antenne 5 d'émission et de réception de données électroniques couplée à l'unité de traitement électronique 4 ;
- un récepteur 6 de système de navigation et de positionnement par satellites, le récepteur 6 étant couplé à l'unité électronique 4.

En référence à la figure 2, l'unité de traitement électronique 4 est logée dans le volume interne 20 du cintre 2.

L'unité de traitement électronique 4 est composée de cartes électroniques 41, 42, dont une première carte électronique 41 et une deuxième carte électronique 42, et de composants électroniques couplés aux cartes électroniques 41, 42, tel que par exemple un microcontrôleur et une mémoire.

Cette unité de traitement électronique 4 peut notamment être connectée au kit d'assistance électrique d'un véhicule électrique équipé du guidon 1.

Tel que cela est détaillé par la suite, l'unité de traitement électronique 4, l'antenne 5 et le récepteur 6 sont maintenus en position par rapport au cintre 2 par l'embout 3 et les moyens de maintien 8.

En référence aux figures 2 et 3, l'antenne 5 d'émission et de réception de données électroniques présente une forme allongée qui s'étend selon un axe longitudinal 50. Cette antenne 5 est destinée à permettre un échange de données électroniques avec un réseau de télécommunications.

Cette antenne 5 correspond par exemple aux antennes utilisées dans les téléphones mobiles.

Ce type d'antenne 5 est classiquement à l'origine de rayonnements électromagnétique s'étendant perpendiculairement à l'axe longitudinal 50, lors d'émission de données électroniques.

Le récepteur 6 de système de navigation et de positionnement par satellites est quant à lui du type présentant une face supérieure 60 destinée à être orientée vers le ciel pour optimiser la captation de signaux envoyés par des satellites de géolocalisation d'une constellation.

Selon le principe de l'invention, et tel qu'illustré par la figure 2, l'antenne 5 et le récepteur 6 sont logés dans la partie externe 32 de l'embout 3. Plus précisément, l'antenne 5 et le récepteur 6 sont entièrement logés dans la partie externe 32 et ne sont ainsi pas situés dans le volume interne 20 du cintre 2.

L'axe longitudinal 50 de l'antenne 5 est parallèle à l'axe central d'extension 210. Ainsi, les ondes électromagnétiques émises par l'antenne 5 sont émises perpendiculairement à l'axe central d'extension 210 de l'extrémité de couplage 21 du cintre 2 et l'émission ou la réception ne sont pas ou peu perturbées par le matériau formant cette extrémité de couplage 21, et plus généralement par le matériau du cintre.

L'antenne 5 est alors au moins partiellement située dans la zone émissive 11.

Toujours selon la figure 2, et selon le principe de l'invention, l'antenne 5 est intercalée le long de l'axe central d'extension 210 entre le récepteur 6 et l'extrémité de couplage 21. En d'autres termes, l'antenne 5 est située de manière proximale à l'extrémité de couplage 21 tandis que le récepteur 6 est situé de manière distale à cette extrémité de couplage 21.

Le récepteur 6 est alors écarté de la zone émissive 11.

Tel qu'illustré par la figure 2, et selon des projections orthogonales sur l'axe central d'extension 210, la partie externe 32 de l'embout 3 présente une longueur LE, l'antenne 5 une longueur LA et le récepteur une longueur LR. Les longueurs LA et LR sont situées dans la longueur LE sans se chevaucher. Ainsi, selon ces projections orthogonales sur l'axe central d'extension 210, l'antenne 5 et le récepteur 6 se suivent, ou présentent un écart même minime entre eux.

En d'autres termes, l'antenne 5 et le récepteur 6 ne se recouvrent pas le long de l'axe central d'extension 210.

Toujours en référence à la figure 2, la longueur LE de la partie externe de l'embout 3 est inférieure à 50mm le long de l'axe d'extension central 210 et est avantageusement supérieure à 35mm. Cette longueur LE est notamment égale à 41mm.

Tel qu'évoqué précédemment, l'unité de traitement électronique 4 comprend une première carte électronique 41 et une deuxième carte électronique 42.

En référence aux figures 2 et 3, la première carte électronique 41 porte l'antenne 5 et le récepteur 6 à laquelle ils sont couplés.

Selon le présent mode de réalisation, la première carte électroniques 41 est montée fixe dans l'embout 3.

En effet, le chariot 81 des moyens de maintien 8 forme un support de couplage des cartes électroniques 41, 42, et l'embout 3 présente une cavité accueillant la première carte électronique 41. Etant donné que l'embout 3 est maintenu fixe par rapport au chariot 81, la première carte électronique 41 est également maintenue fixe par rapport à l'embout 3.

Tel qu'évoqué précédemment, les moyens de maintien 8 permettent à l'embout 3 de présenter une position et une orientation prédéterminée par rapport au cintre 2.

Le guidon 1 est notamment conçu pour présenter une orientation ciel/sol 9 prédéfinie et la première carte électronique 41 est montée transversalement par rapport à cette orientation ciel/sol 9. Plus spécifiquement et en référence aux figures 2 et 3, la première carte électronique 41 est montée perpendiculairement à l'orientation ciel/sol 9 prédéfinie.

Cette première carte électronique 41 présente une face supérieure 411 et une face inférieure 412. Le récepteur 6 est monté sur la face supérieure 411.

L'antenne 5 est quant à elle montée sur la face inférieure 412 de la première carte électronique 41.

En étant monté sur la face supérieure 411 de la première carte électronique 41, le récepteur 6 peut ainsi être orienté vers le ciel.

De cette manière, le récepteur 6 peut présenter une orientation spécifique et notamment avoir sa face supérieure orientée vers le ciel, cette face supérieure étant conçue pour être dirigée vers les satellites de géolocalisation.

Selon le présent mode de réalisation et en référence à la figure 3, le récepteur 6 est couplé à l'unité de traitement électronique 4, et plus spécifiquement à des composants électroniques de l'unité de traitement électronique 4 situés dans le volume interne 20 du cintre 2, par une connexion 7 blindée.

Cette connexion 7 est blindée au moins au niveau de l'antenne 5 le long de l'axe central d'extension 210.

La connexion 7 est en l'occurrence portée par la première carte électronique 41.

Tel qu'illustré par la figure 3, la connexion 7 est située sur la face supérieure 411 de la première carte électronique 41.

Afin de minimiser encore plus la survenue d'interférences résultants de la présence et du fonctionnement de l'antenne 5, la connexion 7 est située à proximité d'un bord de la première carte électronique 41, au moins au niveau de l'antenne 5 le long de l'axe central d'extension 210.

En d'autres termes, la connexion 7 est décalée latéralement sur la première carte électronique 41, au moins au niveau de l'antenne 5 le long de l'axe central d'extension 210, et ainsi le long l'axe longitudinal 50 de l'antenne 5.

La connexion 7 est notamment décalée latéralement sur la première carte électronique 41 de manière à être décalée d'une zone 4110 de la face supérieure 411 correspondant au symétrique, selon un plan de symétrie dans lequel s'inscrit la première carte électronique 41, d'un emplacement de couplage de l'antenne 5 sur la face inférieure 412 de la première carte électronique 41.

## Revendications

1. Guidon (1) pour véhicule, comprenant :
- un cintre (2) présentant un volume interne (20), s'étendant longitudinalement entre deux portions d'extrémité, dont une première portion d'extrémité dite extrémité de couplage (21) qui présente un axe central d'extension (210)
- un embout (3) présentant une partie interne (31) insérée dans l'extrémité de couplage (21) du cintre (2), et une partie externe (32) qui prolonge longitudinalement l'extrémité de couplage (21) le long de l'axe central d'extension (210), la partie externe (32) étant conçue dans un matériau électromagnétiquement perméable ;
- une unité de traitement électronique (4) logée dans le volume interne (20) du cintre (2) ;
- une antenne (5) d'émission et de réception de données électroniques couplée à l'unité de traitement électronique (4), l'antenne (4) étant destinée à permettre un échange de données électroniques avec un réseau de télécommunication ;
- un récepteur (6) de système de navigation et de positionnement par satellites, le récepteur (6) étant couplé à l'unité de traitement électronique (4) ;
le guidon (1) présentant deux zones préférentielles de préhension destinées à être prises en main lors d'une utilisation du guidon (1), dont l'une, dite zone émissive (11), est située du côté de l'extrémité de couplage (21), l'antenne (5) et le récepteur (6) sont logés dans la partie externe (32) de l'embout (3), l'antenne (5) étant située au moins partiellement dans la zone émissive (11), **caractérisé en ce que** l'antenne présente une forme allongée s'étendant selon un axe longitudinal, l'axe longitudinal (50) de l'antenne (5) étant parallèle à l'axe central d'extension (210),
et **en ce que** l'antenne (5) est intercalée le long de l'axe central d'extension (210) entre le récepteur (6) et l'extrémité de couplage (21), le récepteur (6) étant écarté de la zone émissive (11).

2. Guidon (1) selon la revendication précédente, **caractérisé en ce que**, selon une projection orthogonale sur l'axe central d'extension (210), l'antenne (5) et le récepteur (6) se suivent ou sont écartés l'un de l'autre.

3. Guidon (1) selon l'une quelconque des revendications précédentes, **caractérisé en ce que** le récepteur (6) est couplé à l'unité de traitement électronique (4) par une connexion (7) blindée au moins au niveau de l'antenne (5) le long de l'axe central d'extension (210).

4. Guidon (1) selon l'une quelconque des revendications précédentes, **caractérisé en ce que** l'antenne (5) et le récepteur (6) sont montés sur une première carte électronique (41) montée fixe dans l'embout (3), l'embout (3) présentant une position et une orientation prédéterminées par rapport au cintre (2).

5. Guidon (1) selon la revendication précédente, **caractérisé en ce qu'**il présente une orientation ciel/sol (9) prédéfinie, la première carte électronique (41) étant montée transversale par rapport à cette orientation ciel/sol (9) prédéfinie, et le récepteur (6) étant monté sur une face supérieure (411) de la première carte électronique (41), destinée à être orientée vers le ciel.

6. Guidon (1) selon la revendication précédente, **caractérisé en ce que** l'antenne (5) est montée sur une face inférieure (412) de la première carte électronique (41).

7. Guidon (1) selon l'une quelconque des revendications précédentes, **caractérisé en ce que** la partie externe (32) de l'embout (3) présente une longueur inférieure à 50 millimètres le long de l'axe central d'extension (210), et avantageusement supérieure à 35 millimètres.

8. Véhicule comprenant un guidon (1) selon l'une quelconque des revendications précédentes.

## Patentansprüche

1. Lenker (1) für ein Fahrzeug, der Folgendes umfasst:
- eine Stange (2), die ein Innenvolumen (20) aufweist und sich in Längsrichtung zwischen zwei Endabschnitten erstreckt, einschließlich eines ersten Endabschnitts, bezeichnet als Kopplungsende (21), der eine zentrale Erstreckungsachse (210) aufweist;
- ein Endstück (3), das einen inneren Teil (31), der in das Kopplungsende (21) der Stange (2) eingeführt ist, und einen äußeren Teil (32) aufweist, der das Kopplungsende (21) in Längsrichtung entlang der zentralen Erstreckungsachse (210) verlängert, wobei der äußere Teil (32) aus einem elektromagnetisch durchlässigen Material ausgebildet ist;
- eine elektronische Verarbeitungseinheit (4), die im Innenvolumen (20) der Stange (2) untergebracht ist;
- eine Antenne (5) zum Senden und Empfangen elektronischer Daten, die mit der elektronischen Verarbeitungseinheit (4) gekoppelt ist, wobei die Antenne (4) dazu bestimmt ist, einen Austausch elektronischer Daten mit einem Telekommunikationsnetzwerk zu ermöglichen;
- eine Empfangseinrichtung (6) eines satellitengestützten Navigations- und Positionierungssystems, wobei die Empfangseinrichtung (6) mit der elektronischen Verarbeitungseinheit (4) gekoppelt ist;
wobei der Lenker (1) zwei bevorzugte Greifbereiche aufweist, die dazu bestimmt sind, während einer Benutzung des Lenkers (1) mit der Hand ergriffen zu werden, von denen sich einer, bezeichnet als emittierender Bereich (11), am Kopplungsende (21) befindet,
wobei die Antenne (5) und die Empfangseinrichtung (6) im äußeren Teil (32) des Endstücks (3) untergebracht sind, wobei sich die Antenne (5) mindestens teilweise in dem emittierenden Bereich (11) befindet, **dadurch gekennzeichnet, dass** die Antenne eine längliche Form aufweist, die sich entlang einer Längsachse erstreckt, wobei die Längsachse (50) der Antenne (5) parallel zur zentralen Erstreckungsachse (210) verläuft,
und dadurch, dass die Antenne (5) entlang der zentralen Erstreckungsachse (210) zwischen der Empfangseinrichtung (6) und dem Kopplungsende (21) eingefügt ist, wobei die Empfangseinrichtung (6) von dem emittierenden Bereich (11) beabstandet ist.

2. Lenker (1) nach dem vorhergehenden Anspruch, **dadurch gekennzeichnet, dass** die Antenne (5) und die Empfangseinrichtung (6) entlang eines zur Erstreckungsachse (210) orthogonal verlaufenden Vorsprungs aufeinander folgen oder voneinander beabstandet sind.

3. Lenker (1) nach einem der vorhergehenden Ansprüche, **dadurch gekennzeichnet, dass** die Empfangseinrichtung (6) über eine abgeschirmte Verbindung (7) mindestens an der Antenne (5) entlang der zentralen Erstreckungsachse (210) mit der elektronischen Verarbeitungseinheit (4) gekoppelt ist.

4. Lenker (1) nach einem der vorhergehenden Ansprüche, **dadurch gekennzeichnet, dass** die Antenne (5) und die Empfangseinrichtung (6) auf einer ersten Leiterplatte (41) montiert sind, die fest im Endstück (3) montiert ist, wobei das Endstück (3) in Bezug auf die Stange (2) eine vorbestimmte Position und eine vorbestimmte Ausrichtung aufweist.

5. Lenker (1) nach dem vorhergehenden Anspruch, **dadurch gekennzeichnet, dass** er eine vordefinierte Himmel-/BodenAusrichtung (9) aufweist, wobei die erste Leiterplatte (41) in Bezug auf die vordefinierte Himmel-/BodenAusrichtung (9) quer montiert ist und die Empfangseinrichtung (6) auf einer Oberseite (411) der ersten Leiterplatte (41), die dazu bestimmt ist, zum Himmel hin ausgerichtet zu sein, montiert ist.

6. Lenker (1) nach dem vorhergehenden Anspruch, **dadurch gekennzeichnet, dass** die Antenne (5) auf einer Unterseite (412) der ersten Leiterplatte (41) montiert ist.

7. Lenker (1) nach einem der vorhergehenden Ansprüche, **dadurch gekennzeichnet, dass** der äußere Teil (32) des Endstücks (3) entlang der zentralen Erstreckungsachse (210) eine Länge von weniger als 50 Millimetern und vorzugsweise mehr als 35 Millimetern aufweist.

8. Fahrzeug, das einen Lenker (1) nach einem der vorhergehenden Ansprüche umfasst.

## Claims

1. A handlebar (1) for vehicle, comprising:
- a hanger (2) having an internal volume (20), extending longitudinally between two end portions, including a first end portion called the coupling end (21) which has a central axis of extension (210)
- an end piece (3) having an internal part (31) inserted into the coupling end (21) of the hanger (2), and an external part (32) which longitudinally extends the coupling end (21) along the central axis of extension (210), the external part (32) being designed from an electromagnetically permeable material;
- an electronic processing unit (4) housed in the internal volume (20) of the hanger (2);
- an antenna (5) for emitting and receiving electronic data coupled to the electronic processing unit (4), the antenna (4) being intended to allow an exchange of electronic data with a telecommunication network;
- a satellite navigation and positioning system receiver (6), the receiver (6) being coupled to the electronic processing unit (4);
the handlebar (1) having two preferential gripping zones intended to be held in the hand when using the handlebar (1), one of which, called the emissive zone (11), is located on the side of the coupling end (21), the antenna (5) and the receiver (6) are housed in the external part (32) of the end piece (3), the antenna (5) being located at least partially in the emissive zone (11), **characterised in that** the antenna has an elongated shape extending along a longitudinal axis, the longitudinal axis (50) of the antenna (5) being parallel to the central axis of extension (210),
and **in that** the antenna (5) is interposed along the central axis of extension (210) between the receiver (6) and the coupling end (21), the receiver (6) being spaced from the emissive zone (11).

2. The handlebar (1) according to the preceding claim, **characterised in that**, according to an orthogonal projection on the central axis of extension (210), the antenna (5) and the receiver (6) follow each other or are spaced apart from each other.

3. The handlebar (1) according to any one of the preceding claims, **characterised in that** the receiver (6) is coupled to the electronic processing unit (4) by a connection (7) shielded at least at the antenna (5) along the central axis of extension (210).

4. The handlebar (1) according to any one of the preceding claims, **characterised in that** the antenna (5) and the receiver (6) are mounted on a first electronic card (41) fixedly mounted in the end piece (3), the end piece (3) having a predetermined position and orientation relative to the hanger (2).

5. The handlebar (1) according to the preceding claim, **characterised in that** it has a predefined sky/ground orientation (9), the first electronic card (41) being mounted transverse to this predefined sky/ground orientation (9), and the receiver (6) being mounted on an upper face (411) of the first electronic card (41), intended to be oriented towards the sky.

6. The handlebar (1) according to the preceding claim, **characterised in that** the antenna (5) is mounted on a lower face (412) of the first electronic card (41).

7. The handlebar (1) according to any one of the preceding claims, **characterised in that** the external part (32) of the end piece (3) has a length less than 50 millimetres along the central axis of extension (210), and advantageously greater than 35 millimetres.

8. A vehicle comprising a handlebar (1) according to any one of the preceding claims.
